# EUROPEAN PATENT APPLICATION

(11) **EP 1 690 842 A1**
(43) Date of publication of application: **16.08.2006**
(21) Application number: 05002949.5
(22) Date of filing: 11.02.2005
(51) Int. Cl.: C04B 35/185, C04B 41/50, F26B 3/30

(54) **Ceramic compostion and light source for processing plastic materials**

(71) Applicant: IBT InfraBioTech GmbH, 09599 Freiberg (DE)
(72) Inventor: John, Peter, Dr., 09599 Freiberg (DE); Rakhimov, Rustam, Tashkent 700084 (UZ)
(74) Representative: Hörschler, Wolfram Johannes

(57) **Abstract**

The invention discloses a ceramic composition which can be used as a part of an infra-red light source (108) for processing plastic materials and/or objects (122; 410, 416; 514; 610; 710, 712; 810) comprising at least one plastic material. The ceramic composition comprises a concentrate component, the concentrate components preferably comprising MgAl₂O₄, MgCrO₄, CaCrO₄, YCrO₃, ZrO₂, CeO₂ and LaCrO₃. Further, the ceramic composition comprises a mullite remainder component. The invention also discloses a method for manufacturing and/or processing plastic materials and/or objects (122; 410, 416; 514; 610; 710, 712; 810) comprising at least one plastic material using the infra-red light source (108) comprising the ceramic composition according to the invention. This method may comprise, e.g. a lacquering process, a shrinking process, a process of photopolymerization, a process of plasticizing, a cross-linking process, a lamination process, a joining-process etc.

## Description

### Field of the invention

A large number of industrial processes involve manufacturing and processing of plastic materials throughout the value chain. This includes, i.e. polymerization processes for manufacturing plastic materials by generating macromolecular materials from monomeric and/or oligomeric substances. Further, manufacturing and processing of plastic materials involves cross-linking of organic molecules, thus generating three-dimensional organic networks of certain physical and chemical properties. Further, joining one or more objects made of plastic materials or joining objects made of plastic materials to objects made of other materials, e.g. by gluing or welding, is an important part of many industrial processes. Last but not least, shaping of the objects made of plastic materials has to be named, e.g. molding or forming processes.

Most of these manufacturing and processing steps require high processing energy, mostly induced by heat and pressure. Thus, technically complicated production plants are required, and most of the processes and manufacturing technologies named above require a rather high processing time. As a result, with regard to the huge amounts of processed plastic materials world-wide, an immense effort concerning technical investments and energy supply has to be made.

The invention is based on the finding that infra-red light of a certain wave-length can be used for a large variety of applications of manufacturing and processing plastic materials. Therefore, the invention discloses a ceramic composition to be used as an infra-red light source for processing plastic materials. Further, the invention discloses a method for processing plastic materials using the ceramic composition, as well as an infra-red light source for processing plastic materials, the infra-red light source comprising the ceramic composition according to the invention. Further, the invention discloses a setup for processing an object using an infra-red light source according to the invention.

### Prior Art

Ceramic materials have, next to plastic materials, evolved to being essential materials in many fields of industrial applications. Thus, it is also known to the person skilled in the art, that some ceramic compositions can be used as materials emitting electromagnetic waves. The range of the emission wave-length, as well as the manner of excitation of these ceramic emitters, strongly depends on the composition of the ceramic material itself.

US 5,350,927 discloses a ceramic composition formed of rare earth chromium oxides, mainly to be used for generating infra-red radiation for drying or sterilizing various objects. Further, US 5,350,927 discloses an apparatus for drying sterilizing objects. The apparatus comprises a chamber for receiving objects to be dried or sterilized, means for providing energy within the chamber and a first ceramic material comprising a rare earth chromium oxide composition and a stabilizing composition. The ceramic material associated with the chamber is receiving and absorbing energy from the providing means and emitting infra-red radiation of one or more selective wave-length.

DE 69801665 T2 discloses ceramic materials capable of generating continuous infra-red light. Particularly, DE 698 01 665 T2 discloses fire-proved ceramic materials with high thermal, chemical and physical stability. The ceramic materials disclosed in DE 69801665 T2 are usable for a variety of purposes, including drying and sterilizing of objects, treatment of cardiovascular dysfunctions, conveying of gases and fluids, cleaning of air, cooling systems, systems with pulse-like changes of conductance, high-temperature heating systems, as well as platting materials.

Nevertheless, the ceramic materials as disclosed in US 5,350,927 and DE 698 01 665 T2, which can be used for a variety of purposes, exhibit a number of serious disadvantages with regard to their potential use for manufacturing and processing plastic materials. One disadvantage to be emphasized is the requirement of rather long processing times, rendering the use of these ceramic materials rather inefficient and costly.

It is therefore an object of the present invention to provide a ceramic composition to be used as an infra-red light source for processing plastic materials as well as a setup for processing an object comprising at least one plastic material, whereby the ceramic composition and the setup avoid the disadvantages known to the compositions and the setups known from prior art.

### Summary of the invention

The invention relates to a ceramic composition to be used as an infra-red light source for processing a plastic material and/or an object comprising at least one plastic material. Further the invention relates to a method for processing a plastic material and/or an object comprising at least one plastic material using the ceramic composition according to the invention. Further, the invention relates to an infra-red light source, the infra-red light source comprising the ceramic composition according to the invention, as well as to a setup for processing an object comprising at least one plastic material using the infra-red light source according to the invention. Preferred embodiments of the invention are set forth in the dependent claims. All reasonable combinations of the features in the claims shall be disclosed.

The ceramic composition according to the invention comprises a concentrate component and a mullite remainder component. The sum of the percentage of the concentrate component and the mullite remainder component preferably amount to 100 wt-% of the ceramic composition. Preferably, the concentrate component constitutes a percentage of 0.1 to 40.0 wt-%, more preferably 0.1 to 20 wt-% and most preferably 0.1 to 3.0 wt-%, of the ceramic composition, and the mullite remainder component preferably constitutes a percentage of 60.0 to 99.9 wt-%, more preferably 80.0 to 99.9 wt-% and most preferably a percentage of 97.0 to 99.9 wt-% of the ceramic composition.

The concentrate component comprises at least one chemical compound, the compound comprising at least one metal element and oxygen. The at least one metal element may comprise at least one alkaline earth element and/or at least one transition metal element and/or at least one element out of the lanthanides and/or at least one element out of the actinides. Additionally or alternatively, the concentrate component may comprise or preferably consist of Cr₂O₃, whereby the concentrate component preferably constitutes a percentage of 0.1 to 40 wt-%.

Alternatively or additionally, the concentrate component may constitute a percentage of 0.1 to 16 wt-% of the ceramic composition and may comprise or preferably consist of, a chemical compound of the general formula Me¹_{M}Me²_{N}O_{X} and/or Me_{N}Oₓ, whereby Me¹, Me² and Me are metals out of the lanthanides and whereby M, N and X denote positive integers. Preferably, the concentrate component constitutes a percentage of 0.1 to 10 wt-% of the ceramic composition and comprises (or most preferably consists of) Ho₂O₃.

In a further, most preferred ceramic composition according to the invention, the concentrate component comprises, ideally consists of, the following components:
- a first component of MgAl₂O₄ at a concentration of 0.1 to 10.0 wt-%, preferably at a concentration of 0.5 to 1.0 wt-%, more preferably at a concentration of 4.0 to 6.0 wt-% and most preferably at a concentration of 5.0 wt-%,
- a second component of MgCrO₄ at a concentration of 1.0 to 15.0 wt-%, preferably at a concentration of 4.0 to 11.0 wt-% and most preferably at a concentration of 8.0 wt-%,
- a third component of CaCrO₄ at a concentration of 0.0 to 10.0 wt-%, preferably at a concentration of 2.0 to 8.0 wt-%, and most preferably at a concentration of 5.0 wt-%,
- a fourth component of YCrO₃ at a concentration of 0.1 to 5.0 wt-%, preferably at a concentration of 0.5 to 4.0 wt-%, and most preferably at a concentration of 2.5 wt-%,
- a fifth component of ZrO₂ at a concentration of 0.0 to 5.0 wt-%, preferably at a concentration of 0.1 to 5.0 wt-%, and most preferably at a concentration of 2.5 wt-%,
- a sixth component of CeO₂ at a concentration of 0.0 to 1.0 wt-%, preferably at a concentration of 0.1 to 1.0 wt-%, and most preferably at a concentration of 0.5 wt-%, and
- a seventh component of LaCrO₃ at a concentration of 0.0 to 20.0 wt-%, preferably at 0.1 to 18.9 wt-%,

The percentages given above are referring to the percentage given in weight-percent of the total weight of the ceramic composition. Preferably, the concentrate component constitutes a percentage of 0.1 to 20.0 wt-% of the ceramic composition, preferably 0.1 to 3 wt-%. The mullite remainder component comprises 3Al₂O₃·2SiO₂ and/or 2Al₂O₃ ·1SiO₂ (mullite) and constitutes the remainder of the ceramic composition. It has to be noted that the components of the concentrate component as well as of the mullite component are preferred components, but, nevertheless, both the concentrate component as well as the mullite component may contain further components not list above.

The ceramic composition as disclosed above has proven to emit infra-red light in the range of 1.0 to 40 µm, depending on the precise composition. Preferably, the composition is chosen in a way that the emission wavelength (e.g. the peak wavelength) lays within a range of 10 to 20 µm, and most preferably within a range of 2 to 4 µm. In many cases, it is preferable to choose the emission wavelength of the ceramic composition in a way that approximately 20% of the infra-red light is absorbed by the plastic material (depending, e. g., on the plastic material sample geometry). It is therefore advantageous in processing plastic materials to work on the wavelength being not too close to absorption peaks of the plastic material, in order to avoid thermal decomposition of surface layers of the plastic materials due to high infra-red absorption. For instance in polyethylene processing, polyethylene absorbs energy mainly at 3.5 µm and 6.8 µm, but in order to process it optimally, wavelengths of approximately 3 µm are preferred.

The use of infra-red light generated by the ceramic composition as disclosed above has proven to have a positive impact on processing and manufacturing plastic materials in many ways. Thus, different polymerization reactions can be initialized and/or controlled very efficiently by exposing monomers and/or polymers and/or oligomers to infra-red light emitted by the ceramic composition as disclosed above. Further applications will be described.

The ceramic composition as disclosed above can be processed by standard ceramic processing procedures known to the persons skilled in the art. Thus, the ceramic composition according to the invention can be formed by standard ceramic forming procedures into nearly arbitrary shape.

The procedure for processing the ceramic composition may include milling of oxide components or component mixtures by state-of-the-art milling procedures to standard grain sizes. Further, processing of the ceramic composition may include mixing of the components, using the ceramic composition without any additives or using any standard or non-standard additives such as thermoplastic materials, solvents or other organic and inorganic mixtures appropriating to the processing of the ceramic composition. These additives are known to the person skilled in the art. Further, the process of forming the ceramic composition may include high-pressure treatment of the ceramic composition using a press and, thus, shaping a first formed body of the object to be generated of the ceramic composition. Further, processing of the ceramic composition may include a step for fully or partially removing additives, e. g. a primary temperature treatment. Further, a solvent treatment or a treatment of the formed body using various chemicals, such as catalyst solutions, may be applied. The process of shaping the ceramic composition into an object may further include further temperature treatments, such as a sintering process, and, optionally, further pressurizing processes. Shaping of the ceramic composition to form arbitrary objects may include standard shaping procedures, such as mechanical treatment, powder processes, or ceramic injection molding (CIM). Other processes known to the person skilled in the art may be applied, or the processes named above may be combined.

As indicated above, the invention also discloses a method for processing plastic materials using the ceramic composition according to the invention as an infra-red light source. The method may comprise a treatment of plastic materials or precursors of plastic materials, such as monomers, in many ways. It has to be noted that the expression "plastic materials" refers to a large number of potential materials, such as thermoplastic materials and/or thermosetting materials and/or elastomeric materials, comprising organic components, such as polymers comprising hydrocarbons or silicone polymers, as well as compounds of various polymeric materials and/or other organic materials and/or inorganic materials, such as filler materials. Further, treatment of "plastic materials" also comprises treatment of low-molecular organic materials, such as treatment of organic monomers and/or oligomers. "Plastic materials" may also include mixtures of the substances named above with various kinds of solvents, e.g. for the purpose of removing (fully or partially) these solvents from a mixture of organic materials. It may also include compounds comprising the substances named above with non-plastic materials, such as e.g. polymer-metal compounds, e.g. organic layers on top of metal surfaces.

The method for processing plastic materials and/or objects comprising at least one plastic material using the ceramic composition as an infra-red light source may include a step of coating a coating material onto at least one surface of a substrate, the coating material comprising at least one organic component, preferably the coating material comprising a powder and/or a solution and/or a dispersion, and, subsequently, at least partially cross-linking the coating material using the infra-red light source comprising the ceramic composition according to the invention. This step may, e.g. be used for lacquering of various surfaces, such as powder-lacquering of car-body parts, such as e.g. fenders.

The method according to the invention may further comprise a step of drying a plastic material and/or an object comprising at least one plastic material. Thus, the ceramic composition according to the invention may comprise a step of removing water and/or other solvents from the object or the plastic material. Further, the method may comprise a step of homogenizing a plastic material and/or an object comprising at least one plastic material. Thus, the method may comprise a step of homogenizing a polymer compound, which means a mixture of various polymers and/or a mixture of a polymer and a filler material, in order to improve the material quality and the mechanical properties or other properties of the polymer compound and/or objects made thereof.

The method according to the invention may also include a step of shrinking a shrinking foil using the infra-red light source comprising the ceramic composition according to the invention. Preferably, the shrinking foil is used for packaging an object (fully or partially). Thus, the process may be used for packaging food, electronic components, or other objects. Shrinking foils are known to the person skilled in the art, and, analogously, may also include other shrinking plastic objects, such as a shrinking tube to be used for electronic purposes.

The method according to the invention may also include a photo-polymerization step, polymerizing a monomer and/or an oligomer by exposing the monomer and/or oligomer to infra-red light generated by the infra-red light source comprising the ceramic composition according to the invention. This step may include a large number of polymerization reactions, such as radicalic polymerization or polycondensation. Preferably, the process includes a step of radicalic polymerization. This process of radicalic polymerization comprises a large number of successive or parallel steps of combinations of monomers and/or oligomers. The reaction is started by one or more radical molecules ("priming radicals") combining with other molecules and thus, forming new, larger, radical molecules. The formation of priming radicals is often called initialization and can be effected by exposing the monomers or oligomers to elevated temperatures (thermal polymerization) and/or to light (photo-polymerization, e.g. using UV-light and/or a visible light and/or infra-red light) and/or to radiation such as α-, β- or γ-rays (radiation polymerization). Other techniques are possible. These techniques, known to the person skilled in the art, usually lead to rather slow polymerization reactions and, often, are accompanied by unwanted side-reactions. Typically, these polymerization reactions are performed by using a large number of additives, such as "initiators", which are basically molecules easily forming radicals. These initiators are mainly used for generating free radicals, in order to initiate the polymerization chain reaction.

The process of photochemical initialization involves a number of steps which, partially have not been explored so far. The process typically includes the absorption of one or more photons by a molecule. Thus, the molecule absorbs the electromagnetic energy of the photon(s) and, thus, is transferred into an excited state. Various kinds of excited states exist in molecules, such as electronic states, vibrational states, or rotational states. Multi-photons absorptions of the same molecule are possible, their probability typically being dependent on the intensity and the wavelength of the absorbed light.

A de-excitation of the excited states may happen in many ways. First, the excited molecules may de-excite by emitting one or more photons. Second, the excited molecules may de-excite by colliding with other molecules (excited or ground-state) and, thus, transfer their excitation energy (fully or partially) to other molecules or aggregations or molecules. Further, a de-excitation of the excited molecules may happen by splitting off part of the molecules, such as hydrogen atoms or radicals, and thereby forming radical molecules. This possibility of de-excitation may lead to a polymeric chain reaction.

Thus, as explained above, not every light quantum absorbed by a molecule initiates a polymeric chain reaction. Typically, the speed of initialization of a polymeric chain reaction is proportional to the intensity of the irradiated light. Further, the speed of initialization is dependent on the chemical or physical nature of the absorbing molecule (e.g. a monomer or an oligomer) and on the wave-length of the absorbed photons. Further, the speed of photo-polymerization depends on the temperature and, typically, is proportional to the square-root of the intensity of the irradiated light.

As opposed to a general elevation of the temperature of the reaction, an irradiation of the reaction using infra-red light of a certain wave-length may excite selected states of excitation within the molecules and, thus, may favorize an initialization of a certain desired chemical chain reaction without any significant elevation of the temperature of the molecules. Furthermore, by irradiating the molecules with infra-red light of selected wave-length, the length of the polymer chains as well as the degree of cross-linking of certain polymer chains may be controlled.

Thus, the method according to the invention allows for controlling polymerization reactions of various kinds of polymers. Simple one-dimensional polymers, as well as two-dimensional polymers and cross-linked three-dimensional polymers can be processed. The molecular weight of the polymers can be adjusted by the wave-length, the intensity and the duration of the irradiation of infra-red light. Thus, certain physical and chemical properties (e.g. mechanical properties or electrical properties) of the materials can be adjusted. Moreover, infra-red light sources of different wave-length can be used during the process, e.g. in order to generate several kinds of excited states. The irradiation of the various light sources may also vary with time.

As indicated above, the method of polymerization according to the invention may also include a polymerization of a polymer compound. Thus, a mixture of monomers and/or oligomers may be used, and the mixture may contain at least one filler material. The at least one filler material may preferably comprise carbon fiber particles, glass particles, textile fibers, wood particles, metal particles, and/or ceramic particles. The size of the particles and/or fibers preferably is in the range between nanometers and millimeters, depending on the application of the compound.

Further, the method may include plasticizing thermoplastic material for manufacturing a molded object using the infra-red light source comprising the ceramic composition according to the invention. Thus, the infra-red light source may, e.g. be applied with injection-molding machines, such as for heating up the thermoplastic compound to be injected close to an injection nozzle. Thus, the thermoplastic compound is plasticized and rendered moldable. Further, the infra-red light source may be used inside a mold, e.g. by adding a ceramic layer comprising the ceramic composition according to the invention covering the inside of the mold cavity. Therefore, the temperature or the variation of temperature with time of the thermoplastic compound injected into the mold may be precisely controlled using the ceramic composition according to the invention. The reproducibility of the injection process can be improved and defects within the molded objects can also be reduced.

Further, the method according to the invention may include a step of cross-linking an object manufactured of a plastic material using the infra-red light source, the plastic material comprising at least one thermosetting material and/or one vulcanizable material. Thus, the infra-red light source comprising the ceramic composition according to the invention may be used for cross-linking, e.g. objects made of epoxy resins or comprising other thermosetting materials. Further, vulcanizable materials, such as rubber, may be comprised, which are capable of being cross-linked via sulfur bridges or other types of chemical cross-links. Thus, chemical and/or mechanical properties of the material, such as the mechanical stability, are improved.

Further, the method according to the invention may include laminating at least one plastic foil and/or at least one plastic layer onto at least one surface of an object using the infra-red light source comprising a ceramic composition according to the invention. For instance, the method according to the invention might be applied to laminate bank cards or ID cards.

Further, the method according to the invention may include manufacturing of reinforced plastic materials and/or molding of objects thereof, using the infra-red light source comprising the ceramic composition according to the invention, the reinforced plastic materials preferably comprising fibers and/or fabrics and/or filler materials. Thus, the method according to the invention may be applied, e.g., for compounding plastic materials, e.g. various kinds of thermoplastic polymers and various filler materials such as carbon, fibers etc. As an example, the infra-red light source may comprise a ceramic layer comprising the ceramic compound according to the invention, whereby the ceramic layer covers the inside of a compounding machine and heats up the mixture of organic and/or inorganic materials to be compounded within the compounding machine.

Further, the method according to the invention may include a joining step for joining components by gluing and/or welding using the infra-red light source comprising the ceramic compound according to the invention. As an example, two sheets of plastic materials may be joined by overlapping them and exposing at least part of the overlapped region to infrared light generated by the infra-red light source comprising the ceramic compound according to the invention. Thus, the plastic material may locally by melted, allowing for joining the two sheets of plastic materials. This procedure may be embodied in many ways known to a person skilled in the art. Further, dedicated "glue" materials may be used, e.g. strings of thermoplastic materials, which, when it is melted by the infra-red light source, and, afterwards, solidified again, may be used to join two objects. Further, the infra-red light source may be used to solidify a thermosetting glue, such as an epoxy resin.

Further, the method according to the invention may include a step of heating and subsequently thermo-shaping of objects using the infra-red light source comprising the ceramic compound according to the invention. For instance, bending of thermoplastic tubes for various purposes may be performed.

Further, the method according to the invention may include a step of thermoplastic recycling of plastic materials using the infra-red light source comprising the ceramic compound according to the invention. For example waste materials comprising a number of thermoplastic materials can be exposed to infra-red radiation generated by the infra-red light source: Thus, melting and mixing of the thermoplastic materials, or, alternatively or additionally, removing unwanted organic materials by separation or decomposition, are enhanced.

As indicated above, the invention also discloses an infra-red light source for processing plastic materials and/or objects comprising at least one plastic material, the infra-red light source comprising a ceramic composition as disclosed above. The ceramic composition can be used for absorbing heat and for emitting infra-red light in a predetermined spectral range. Preferably, the infra-red light source exhibits a maximum in emissivity at a wave-length of 1.0 to 40.0 µm, preferably within a range of 10.0 to 20.0 µm, and most preferably within a range of 2 to 4 µm. The infra-red light source may further comprise a heat source for directly or indirectly heating up the ceramic composition. Heat transfer from the heat source may include various ways of heat transfer, including radiation transfer, convection, contact transfer or a transfer via thermally conductive materials in between the heat source and the ceramic composition.

The infra-red light source may further comprise a carrier material and/or a carrier body for heat absorption and/or heat transfer. Thus, e.g. the carrier material and/or the carrier body may be involved in transferring heat from the heat source to the ceramic composition. Preferably, the carrier material may comprise one or more of the following materials: Fe, SiO₂, 3Al₂O₃ · 2SiO₂ and/or 2Al₂O₃ ·1SiO₂ (mullite), corundum, A1 and/or Cu. These materials, alone or in combination, have proven to be well-suited materials for heat-absorption from many heat-sources, as well as for transferring heat from the heat-source to the ceramic composition according to the invention.

Further, the infra-red light source may comprise a reflector device. The ceramic composition may generate infra-red light and emit this light, inter alia, into an unwanted direction. The reflector device, which may comprise one or more reflectors, may be applied to reflect this light emitted into unwanted directions and re-direct this infra-red light into a preferred direction. Thus, the intensity of irradiation of infra-red light in a certain area, e.g. a reaction vessel, is significantly increased.

For many applications, the infra-red light source according to the invention preferably may comprise at least one unit of essentially rod-like shape. Thus, the infra-red light source may in fact act like a line-shaped light source. This shape of the infra-red light source is especially useful in serial manufacturing processes, e.g. for processes involving manufacturing and infra-red light treatment of endless plastic foils. In this case, the rod-shaped infra-red light source is placed perpendicular to a movement of the plastic foils, resulting in the illumination covering the whole width of the plastic foils.

In a preferred setup, the infra-red light source comprises at least one preferably coil-shaped electrical heater wire and a carrier body. The carrier body comprises at least one carrier material, e.g. the preferred carrier material described above. A first portion of a carrier body is coated by at least one layer comprising a ceramic composition according to the invention. A second portion of the carrier body is coated by at least one reflector layer reflecting infra-red light emitted by the at least one layer comprising the ceramic composition. This preferred setup of the infra-red light source is very robust and compact and, thus, is suited for many applications of industrial manufacturing. The electrical heater wire may be in heat-transfer contact with the carrier body, and the infra-red light source may substantially have the shape of a rod or a tube or a plate.

Further, the invention discloses a setup for processing a plastic material and/or an object comprising at least one plastic material, the setup comprising a material and/or an object to be processed and an infra-red light source according to the invention. The infra-red light source at least partially surrounds the object to be processed and/or at least partially fills at least one cavity within the object. The setup for processing using the ceramic composition according to the invention and at least one infra-red light source comprising the ceramic composition according to the invention guarantees a very uniform exposure of the object to be processed by infra-red light emitted from the infra-red light source according to the invention. Thus, the quality of the production process dramatically improves, and the objects generated by this process exhibit an improved physical, chemical and mechanical stability.

### Description of the drawings

For a better understanding of the present invention, reference is established to the following description made in connection with accompanying drawings in which:
- Figure 1A: shows a cross-sectional view of a first embodiment of an infra-red light source according to the invention;
- Figure 1B: shows a perspective view of the infra-red light source according to Figure 1A;
- Figure 2: shows a second embodiment of an infra-red light source according to the invention basically having the shape of a plate;
- Figure 3: shows a perspective view of a third embodiment of an infra-red light source according to the invention having the shape of a tube;
- Figure 4A: shows a first step of powder lacquering of a car-body part;
- Figure 4B: shows a second step of a process of powder-lacquering of the car-body part according to Figure 4A;
- Figure 5A: shows a first step of a method of packaging an object using a shrinking foil;
- Figure 5B: shows a second step of the method according to Figure 5A;
- Figure 5C: shows a third step of the method according to Figure 5A;
- Figure 5D: shows a typical absorption spectrum of polyethylene;
- Figure 6A: shows a first step of a method of heat-shaping of a plate using an infra-red light source according to the invention;
- Figure 6B: shows a second step of the method according to Figure 6A;
- Figure 7A: shows a first step of a method of joining two objects using an infra-red light source according to the invention;
- Figure 7B: shows a second step of the method according to Figure 7A;
- Figure 7C: shows a third step of the method according to Figures 7A and 7B; and
- Figure 8: shows a method of vulcanizing a rubber part.

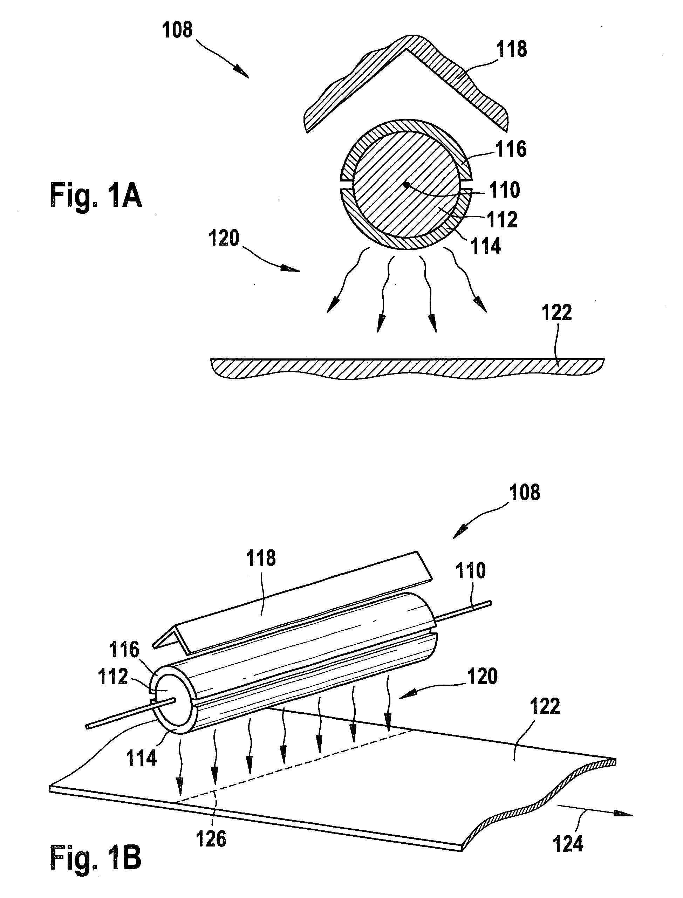

In Figures 1A (side view) and 1B (perspective view), a first embodiment of an infra-red light source 108 according to the invention is depicted. A Tungsten heater wire 110, which can be electrically contacted, and which has a linear shape or the shape of a coil, is surrounded by a carrier body 112, which, in this embodiment, comprises a carrier material of mullite. The carrier body 112, as can be seen in Figure 1B, is formed like a rigid linear rod with a circular cross-section. The infra-red light source 108 comprises an emitter layer 114 comprising the ceramic composition as disclosed above. The emitter layer 114 basically covers the lower half of the rod-shaped carrier body 112, as can best be seen in Figure 1A.

Further, the infra-red light source 108 comprises a reflector layer 116, which, in this example, comprises a reflective material, such as aluminum or silver. The reflector layer 116 basically covers the upper half of the surface of the rod-shaped carrier body 112, as can be seen in Figure 1A. Further, the infra-red light source 108 comprises an additional reflector 118, which, in this embodiment, is shaped like a roof.

The use of the infra-red light source 108 for processing plastic materials can be best described in view of Figure 1B. By electrically contacting the Tungsten heater wire 110, a current is run through the Tungsten heater wire 110, and, thus, resistively heating up the Tungsten heater wire 110. The heat generated by the Tungsten heater wire 110 is partially absorbed by the carrier body 112, which again emits this absorbed heat at the same or a different wavelength. Alternatively or additionally, the carried body 112 can simply conduct the heat generated by the Tungsten heater wire 110 to its outer surface. The heat which is transferred or emitted towards the reflector layer 116 is mostly reflected back into the carrier body 112 by the reflector layer 116. The heat transferred or emitted towards the emitter layer 114 on the other hand is absorbed by the emitter layer 114, which again generates and emits infra-red light 120. Since only the lower half of the carrier body 112 is covered by the emitter layer 114, the infra-red light 120 is basically emitted downwards in Figure 1A. The reflector layer 116 and the reflector 118 further help to redirect infra-red light 120, which, "accidentally", has been emitted in an upward direction in Figure 1A, by reflecting this infra-red light 120 downwards. Thus, basically all infra-red light 120 generated by the emitter layer 114 is emitted towards a substrate 122 underneath the infra-red light source 108, the substrate 122 comprising a plastic material. As can be seen in Figure 1B, the substrate 122 may comprise a plastic foil, rapidly moving into a transportation direction 124. The infra-red light source 108 of basically rod-like shape is exposing the surface of the substrate 122 to infra-red light 120 basically along an exposure line 126 (which, in fact, is rather shaped like a "stripe" than a sharp line). Thus, by moving the substrate 122 in transportation direction 124 at uniform speed, the surface of the substrate 122 is uniformly exposed to infra-red light 120.

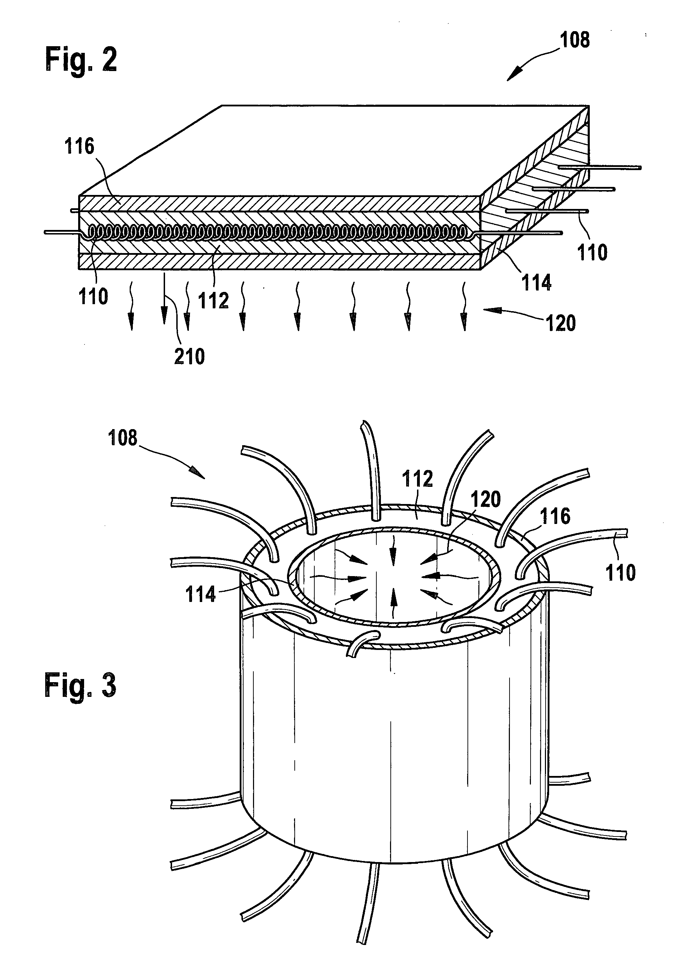

In Figure 2, a second embodiment of an infra-red light source 108 is depicted. In this embodiment, the infra-red light source 108 basically has the shape of a planar plate. A carrier body 112, basically comprising the same ceramic composition as in the embodiment according to Figures 1A and 1B, encloses a number of Tungsten heater wires 110. The carrier body 112 is covered along its upper surface by a reflective layer 116, which, basically, can comprise the same reflecting materials as in the embodiment according to Figures 1A and 1B. Further, the carrier body 112 is covered along its lower surface by an emitter layer 114, also basically comprising the same ceramic composition as in the embodiment according to Figure 1A and 1B. In this embodiment, the main direction of emission 210 of infra-red light 120 is pointing downwards in Figure 2.

In Figure 3, a third embodiment of an infra-red light source 108 is depicted, having basically circular shape. Again, a three-layer setup is used, in this case each of the layers having a circular cross-section and the shape of tube. A carrier body 112, comprising basically the same materials as in the previous embodiments, is covered along its out circumference by a reflector layer 116, which again comprises basically the same materials as the reflector layers 116 in the previous embodiments. Along its inner circumference, the carrier body 112 is covered by an emitter layer 114, which again comprises the same ceramic composition as in the previous embodiments. Further, the carrier body 112 comprises a number of Tungsten heater wires 110 extending in an axial direction through the tube of the carrier body 112. In this third embodiment according to Figure 3, the main direction of emission of infra-red light 120 is towards the interior of the tube of the infra-red light source 108.

The three embodiments of the infra-red light source 108 as disclosed above are by no means the only way of realizing an infra-red light source 108 using the ceramic composition according to the invention and are intended for illustration purposes rather than for limiting the scope of the invention. Thus, infra-red light sources 108 enclosing more than one emitter layer 114 can be designed, as well as infra-red light sources 108 of other shapes than the shapes of the infra-red light sources 108 as disclosed above. Particularly, the shape of the infra-red light source 108 can be adapted to the object to be exposed to infra-red light 120. In many cases, the infra-red light source 108 can principally be shaped in a way that either the object to be exposed to infra-red light 120 is (fully or partially) enclosed by the infra-red light source 108. Alternatively or additionally, the infra-red light source 108 can be designed in a way that it is suited to fill one or more cavities within the object to be exposed to the infra-red light 120. As an example, the embodiment of the infra-red light source 108 according to Figure 3 may be used to expose the outer surface of a plastic tube or a plastic rod to infra-red light 120 by sliding the plastic tube or the plastic rod in an axial direction through the inner opening of the infra-red light source 108 according to the embodiment depicted in Figure 3. Thus, the infra-red light source 108 according to the invention is very flexible in design and can be used to uniformly expose surfaces of nearly arbitrary shape to infra-red light 120.

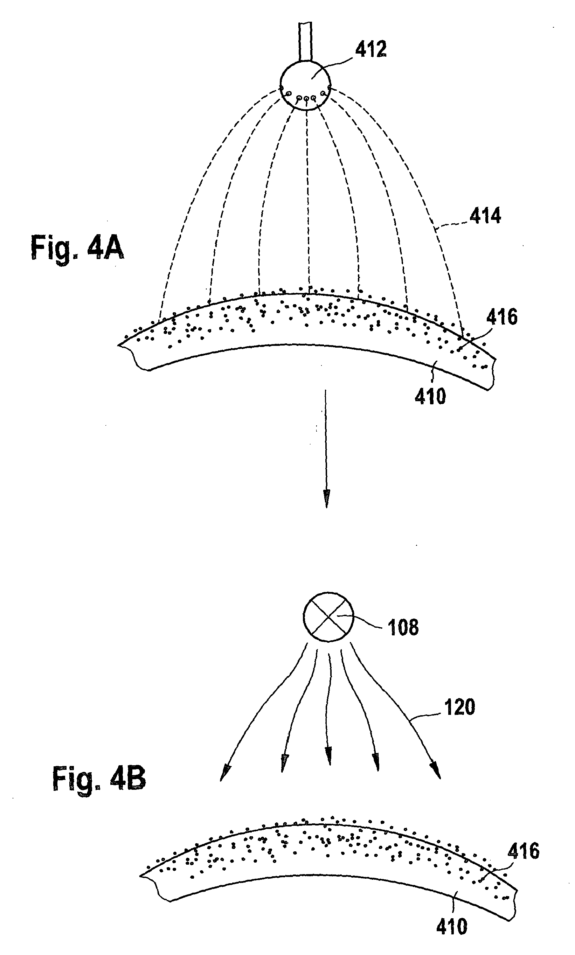

In Figures 4A and 4B, a first embodiment of a method according to the invention for processing plastic materials using the ceramic composition and an infra-red light source 108 is depicted. In this embodiment, the infra-red light source 108 is used for lacquering of objects, such as car-body elements like a fender 410. In a first step, the object, e.g. the fender 410, is covered with lacquer 414, using a lacquer source 412. This lacquer 414 may be of various shape or consistency. Thus, powder lacquers 414 or liquid lacquers 414 (dispersions, mixtures or solutions) can be employed and, e.g., sprayed and/or dispersed onto the surface of the fender 410, thus, forming a (preferably uniform) lacquer layer 416 on the surface of the fender 410 is possible. This lacquer 414 may further include various kinds of resins, such as epoxy resins, polyester resins, acrylic resins or other thermosetting materials. These resins are often used for protecting the surface of the objects to be coated, as well as for improving the finishing of the surfaces, such as the surfaces of metals, wood, plastic materials, and/or materials for building.

In a second step, as depicted in Figure 4B, the surface of the fender 410, covered by the lacquer layer 416, is exposed to infra-red light 120, generated by an infra-red light source 108. This infra-red light source 108 can, as an example, be designed like the embodiment depicted in Figure 1A. Other embodiments are possible, such as embodiments which are adapted to the curvature of the surface of the fender 410, thus, a more uniform exposure of the surface of the fender 410 to the infra-red light 120 is generated.

In standard lacquering procedures, such as for lacquering automotive parts, the objects to be lacquered usually are covered with lacquer powder 414 and, afterwards, the lacquer 414 is heated (typically using convection heat) up to a temperature of 130°C at the surface and, thus, by exposing the objects to heat off this type for approximately 30 min., the lacquer 414 is dried and polymerized. Using the process according to the invention and as depicted in Figures 4A and 4B, the exposure time is reduced from 30 min. to approximately 7 sec. to 5 min. Further, the adhesion of the lacquer layers 416 and the stability of the lacquer surface against mechanical influences (such as bending, shock, elongation etc.) are significantly improved. Using enamel powders, such as melamine enamel, complete drying of the lacquer 414 can be achieved within 5 min. at relatively low temperatures.

The second step of the method according to the invention, as depicted in Figure 4B, can also be divided into several single steps of exposure. Thus, it has proven to be advantageous to divide the exposure into a first fixation step and a second polymerization step. The first step (fixation step) typically has a duration of 5 to 30 sec. (depending on the kind and the dimensions of the object to be coated as well as on the lacquer material 414) and results in a fixation of the lacquer layer 416 to the surface of the object, e.g. the fender 410. The second step, for which a different infra-red light source 108 or the same infra-red light source 108 at preferably a different temperature can be used, typically has a duration of approximately 3 to 5 min. Within this second step, a complete polymerization of the lacquer layer 416 on the surface of the fender 410 is performed. Additionally, the object 410 can be heated during one step (e.g. during the fixation step) or both steps. This two-step lacquering procedure using the infra-red light source 108 according to the invention has proven to result in high-quality lacquer layers 416, exhibiting a superior quality with regard to mechanical stability, density against penetration or humidity and stability against UV-light as compared to traditional lacquering techniques.

Further, aqueous solutions of colors and lacquer 414 can be combined with the method as described in Figures 4A and 4B. Thus, the aqueous colors and lacquers 414, after coating onto a surface of an object 410, can efficiently be dried using infra-red light 120. Applying this technique and using aqueous solutions of lacquer 414 (at a content of 17 % water), drying times could be reduced from 25 min. using traditional techniques of resistive heating down to 4 min. using infra-red light sources 108 according to the invention. For drying of solvent-based lacquers 414, including polymerization of the base polymers, a processing time of 4 min. could be achieved using the infra-red light source 108 according to the invention, as compared to 45 min. using traditional techniques. For traditional powder lacquers 414 on various substrates, processing and polymerization time could be reduced from 20 min. using traditional techniques down to 1 min. using infra-red light sources 108 according to the invention. Thus, as these examples clearly demonstrate, the use of the ceramic composition according to the invention and of infra-red light sources 108 comprising a ceramic composition according to the invention dramatically improves the quality of coated objects and reduces processing time and energy consumption.

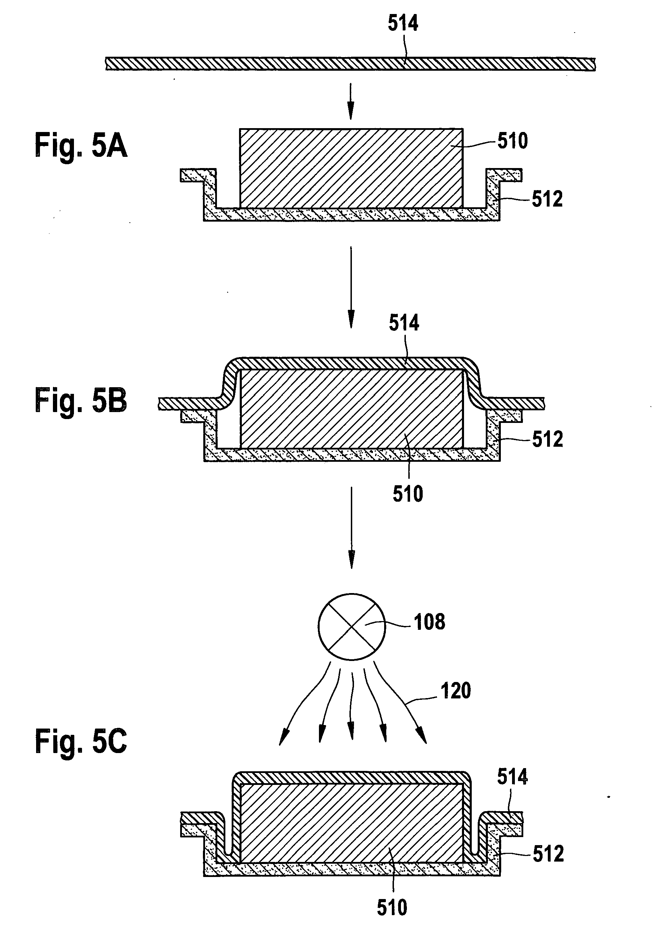

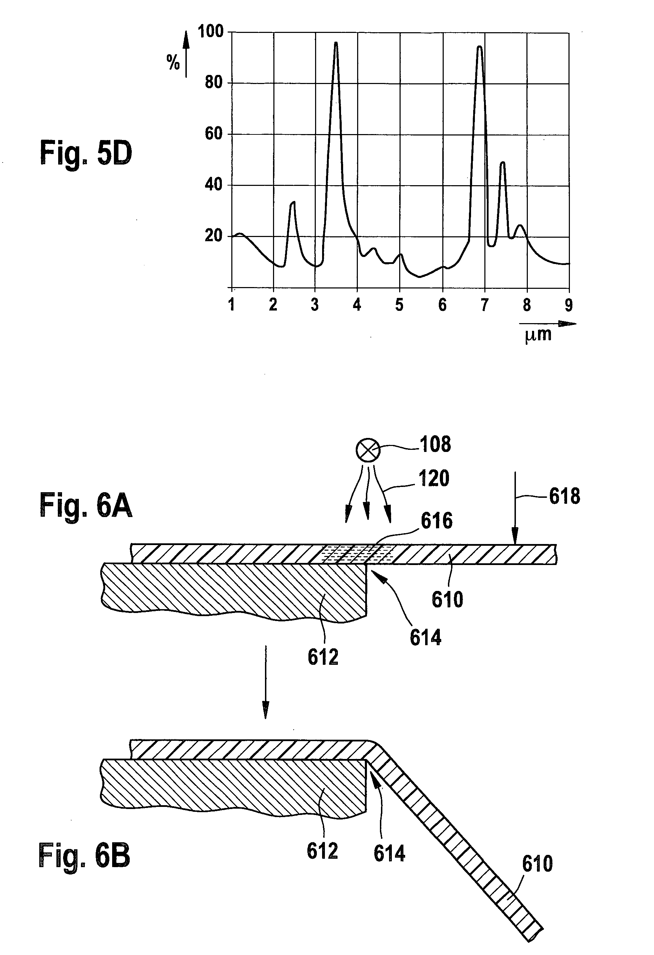

In Figures 5A to 5C and in Figures 6A and 6B two embodiments of a method according to the invention using an infra-red light source 108 according to the invention for heat-shrinking and for heat-forming of objects comprising plastic materials are demonstrated.

In the first embodiment according to Figure 5A to 5C, a product 510, e.g. food, is placed in a tray 512 and is exposed to air. In a second step, as depicted in Figure 5B, the product 510 is covered by a plastic foil 514, e.g. PET-foil or PE-foil. In a third step, as depicted in Figure 5C, the product 510 covered by the plastic foil 514 is exposed to infra-red light 120 generated by an infra-red light source 108, e.g. the infra-red light source 108 according to one of the embodiments disclosed above. As a result, the plastic foil 514 is shrinking significantly, thus, basically covering the surface of the product 510 and the tray 512, and thus, tightly packaging the product 510 and consequently protecting the product 510 from environmental impacts, such as air or humidity.

Typically, for many plastic materials commercially available, the absorption spectra show an absorption peak at a wavelength of approximately 3 to 4 µm. In Figure 5D, a typical absorption spectrum of polyethylene is depicted, showing two narrow absorption peaks at approx. 3.5 µm and 6.8 µm. Typical spectra of infra-red light sources, e.g. thermal emitters at a temperature of 2500°C, exhibit a peak in spectral distribution of energy close to approximately 1 µm, which is often called near infra-red light (NIR). Thus, most of the infrared light 120 emitted from conventional light sources is transmitted through most plastic materials rather than being absorbed. Thus, efficiencies for conventional infra-red light heating typically are in the range of 5 %. Using the ceramic composition according to the invention and infra-red light sources 108 according to the invention and as disclosed above, the emission spectra of the infra-red light sources 108 are better adapted to the absorption spectra of commercially available plastic materials. Thus, processing and shrinking times of conventional plastic materials can be significantly reduced using infra-red light sources 108 according to the invention. For, e.g. PET, shrinking times using infra-red light sources 108 according to the invention could be reduced by 50 % as compared to traditional heating techniques, for PE even reductions of approximately 60 % could be achieved. Therefore, again, the energy consumption for typical processes of processing plastic materials can be significantly reduced and the throughput can be increased.

In Figures 6A and 6B, a process of heat-forming of an object 610 comprising a plastic material is disclosed. The object 610 is supported by a support block 612. The support block 612 has a sharp edge 614. In a first step, as depicted in Figure 6A, the object 610 is locally exposed to infra-red light 120, using an infra-red light source 108 according to the invention. Within a melting region 616, the object 610 is hence liquefied or plasticized. By exposing the object 610 to a mechanical force 618 (indicated by an arrow) the object 610 is bent around the sharp edge 614, as depicted in the second step in Figure 6B. Thus, by using the infra-red light source 108 according to the invention, a very flexible way of shaping various kinds of objects 610 is possible.

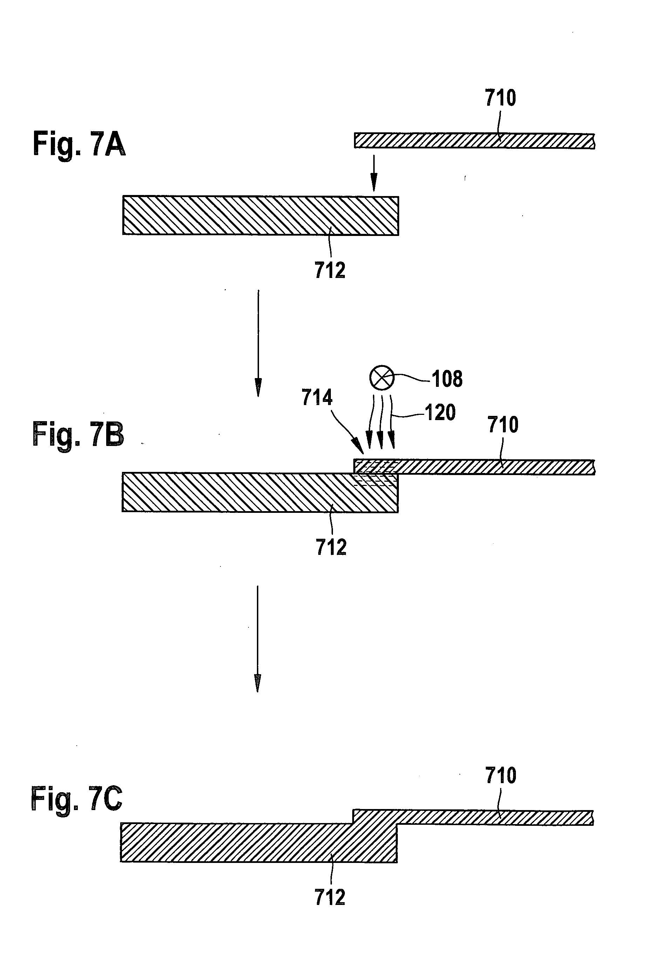

In Figures 7a to 7C, a method of joining two or more objects comprising plastic materials, in this embodiment two plates 710, 712 of thermoplastic materials, is depicted. In a first step, as depicted in Figure 7a the first plate 710 is partially brought into contact with the second plate 712, rendering the two plates 710, 712 to overlap in a joining region 714. In a second step, as depicted in Figure 7B, the joining region 714 is locally exposed to infra-red light 120 generated by the infra-red light source 108 according to the invention, e.g. the rod-shaped infra-red light source according to the embodiment depicted in Figures 1A and 1B. Thus, the first plate 710 is locally melted or plasticized within the joining region 714. The second plate 712 can also be melted and/or plasticized locally within the joining region 714. Additionally, not depicted in Figure 7B, force can be applied to the joining region 714, in order to press the first plate 710 together with the second plate 712, and, thus, to intensify the connection between the two plates 710, 712. In the third step, as depicted in Figure 7C both plates 710, 712 are cooled down, and the plastic material within the joining region 714 solidifies. A mechanically stable connection between the first plate 710 and the second plate 712 has been generated.

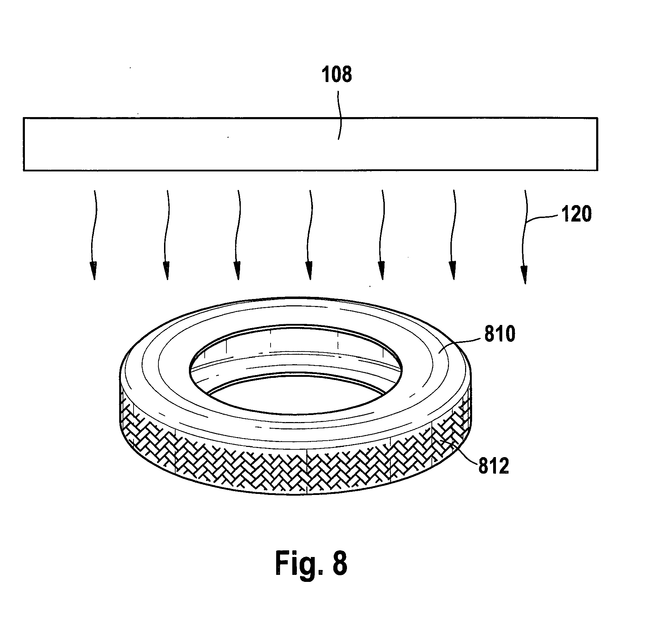

In Figure 8, a method of vulcanizing plastic materials, such as rubber materials, using the infrared light source 108 according to the invention is depicted. Vulcanization is a method known to the person skilled in the art and is, e.g. used for transforming plastic caoutchouc into elastic rubber. Typically, a "hot" vulcanization process is used, using mixtures of caoutchouc, sulfur and other additives (accelerators, fillers, flexibilizers etc.). The mixture is heated up to a temperature of more than 100°C, using convection heating or contact heating. Thus, a chemical reaction is induced, generating sulfide or polysulfide bridges between the macromolecules of a caoutchouc and forming a three-dimensional structure of the polymer. As a result, the mechanical properties of the rubber are significantly improved, e.g. the mechanical rigidity and other mechanical or chemical properties. Further, the stability of the rubber against aging, stability against chemical reactions, thermal stability and other properties are significantly improved.

In order to generate soft and highly elastic rubber, natural caoutchouc or mixtures of natural and synthetic caoutchouc are usually employed. The formation of radical molecules in conventional processes typically is initiated by thermal processes. Nevertheless, thermal initiation, as known to the person skilled in the art, normally leads to a high concentration of radicals and results in relatively short polymer chain lengths and low molecular weights, since each radical is also a potential stopper for a molecular chain reaction.

The invention discloses also a method of vulcanization of plastic materials (such as natural caoutchouc, synthetic caoutchouc etc.) by exposing the mixtures of plastic materials, sulfur and other additives (see above) to infra-red light 120 generated by the infra-red light source 108 according to the invention. This process is symbolically depicted in Figure 8. A non-vulcanized rubber tire 810 is exposed to infra-red light 120 generated by the infra-red light source 108 according to the invention. Again, as explained above, the infra-red light source 108 can be, as supposed to the drawing in Figure 8, shaped in order to match the outer shape of the rubber tire 810. For instance, an infra-red light source 108 of tubular shape, as depicted in Figure 3, can be applied, in order to expose the circumferential contact surface 812 of the rubber tire 810 to infra-red light 120. The inner opening of the rubber tire 810 might be further exposed to infra-red light 120 by inserting a rod-shaped infra-red light source 108.

Moreover, the application of the infra-red light source 108 according to the invention significantly accelerates the vulcanization process and improves the efficiency and the quality of the process. Thus, a highly elastic rubber can be generated from synthetic caoutchouc, with properties being close to the properties of natural caoutchouc. The processing time of vulcanization of rubber boots was therefore reduced from 2 hours under exposure of pressure down to 1 hour without exposure of pressure by using the method according to the invention. Throughout the process, the surface of the samples was monitored and was found to be below 140°C. Using conventional techniques, the temperatures around 160°C had to be applied. Further, the samples generated by the method according to the invention were found to be nearly twice as stable against mechanical stress and more stable against aging processes.

### Reference numbers

- 108: infra-red light source
- 110: tungsten heater wire
- 112: carrier body
- 114: emitter layer
- 116: reflector layer
- 118: reflector
- 120: infra-red light
- 122: substrate
- 124: transportation direction
- 126: exposure line

- 210: direction of emission

- 410: fender
- 412: lacquer source
- 414: lacquer
- 416: lacquer layer

- 510: product
- 512: tray
- 514: plastic foil

- 610: object
- 612: support block
- 614: sharp edge
- 616: melting region
- 618: mechanical farce

- 710: first plate
- 712: second plate
- 714: joining region

- 810: rubber tire

## Claims

1. Ceramic composition for use in an infra-red light source (108) for processing a plastic material and/or an object (122; 410, 416; 514; 610; 710, 712; 810) comprising at least one plastic material, wherein the ceramic composition comprises:
a) 0.1 to 40.0 wt-% of a concentrate component comprising at least one chemical compound, wherein the chemical compound comprises at least one metal element and oxygen; and
b) 60.0 to 99.9 wt-% a mullite remainder component comprising 3Al₂O₃ · 2SiO₂ and/or 2Al₂O₃ · 1SiO₂ (mullite).

2. The ceramic composition according to the preceding claim, wherein the at least one metal element comprises at least one element selected from the group consisting of alkaline earth elements, transition metal elements, the lanthanides and the actinides.

3. The ceramic composition according to one of the preceding claims, wherein the concentrate component comprises Cr₂O₃.

4. The ceramic composition according to one of the preceding claims, comprising 0.1 to 16 wt-% of the concentrate component, wherein the concentrate component comprises a chemical compound of the general formula Me¹_{M}Me²_{N}Oₓ and/or M_{EN}O_{X}, wherein Me¹, Me² and Me are metals selected from the lanthanides and wherein M, N and X denote positive integers.

5. The ceramic composition according to the preceding claim, comprising 0.1 to 10 wt-% of the concentrate component, wherein the concentrate component comprises Ho₂O₃.

6. The ceramic composition according to claim 1, wherein the concentrate component comprises:
a1) 0.1 to 10.0 wt-% of MgAl₂O₄;
a2) 1.0 to 15.0 wt-% of MgCrO₄;
a3) 0.0 to 10.0 wt-% of CaCrO₄;
a4) 0.1 to 5.0 wt-% of YCrO₃;
a5) 0.0 to 5.0 wt-% of ZrO₂;
a6) 0.0 to 1.0 wt-% of CeO₂; and
a7) 0.0 to 20.0 wt-% of LaCrO₃.

7. A method for manufacturing and/or processing a plastic material and/or an object (122; 410, 416; 514; 610; 710, 712; 810) comprising at least one plastic material using an infra-red light source (108) for exposing the plastic material and/or the object (122; 410, 416; 514; 610; 710, 712; 810) to infra-red light (120), the infra-red light source (108) comprising the ceramic composition according to one of the preceding claims.

8. The method according to the preceding claim, comprising at least one of the following steps:
a) coating a coating material (414) onto at least one surface of a substrate (410), the coating material (414) comprising at least one organic component, preferably the coating material (414) comprising a powder and/or a solution and/or a dispersion, and subsequently at least partially cross-linking the coating material (414) using the infra-red light source (108);
b) drying a plastic material and/or an object (122; 410, 416; 514; 610; 710, 712; 810) comprising at least one plastic material;
c) homogenizing a plastic material and/or an object (122; 410, 416; 514; 610; 710, 712; 810) comprising at least one plastic material;
d) shrinking of a shrinking foil (514), preferably for packaging an object (510);
e) photo-polymerizing a monomer and/or a mixture of monomers and/or a mixture of at least one monomer and at least one filler material, the filler material preferably comprising carbon fiber particles, and/or glass particles and/or textile fibers, and/or wood particles, and/or metal particles, and/or ceramic particles, by exposing the monomer and/or the mixture to infra-red light (120) generated by the infra-red light source (108);
f) plasticizing a thermoplastic material for manufacturing a molded object;
g) cross-linking an object (810) manufactured of a plastic material, the plastic material comprising at least one thermosetting material and/or one vulcanizable material;
h) laminating at least one plastic foil (514) and/or at least one plastic layer onto at least one surface of an object (510);
i) manufacturing of reinforced plastic materials and/or molding of objects thereof, the reinforced plastic materials preferably comprising fibers and/or fabrics and/or filler materials;
j) joining components (710, 712) by gluing and/or welding;
k) heating and subsequently thermo-shaping of objects (610); and/or
1) thermoplastic recycling of plastic materials.

9. An infra-red light source (108) for processing a plastic material and/or an object (122; 410, 416; 514; 610; 710, 712; 810) comprising at least one plastic material, the infra-red light source (108) comprising the ceramic composition according to one of the preceding claims referring to a ceramic composition for absorbing heat and emitting infra-red light (120) in a pre-determined spectral range.

10. The infra-red light source (108) according to the preceding claim, the infra-red light source (108) further comprising a heat source (110) for directly or indirectly heating up the ceramic composition.

11. The infra-red light source (108) according to one of the two preceding claims, the infra-red light source (108) further comprising a carrier material and/or a carrier body (112) for heat absorption and/or heat transfer.

12. The infra-red light source (108) according to the preceding claim, the carrier material and/or the carrier body (112) comprising one or more of the following materials: Fe, SiO₂, 3Al₂O₃ · 2SiO₂ and/or 2Al₂O₃ ·1SiO₂ (mullite), corundum, Al, and/or Cu.

13. The infra-red light source (108) according to one of the four preceding claims, the infra-red light source (108) further comprising a reflector device (116, 118).

14. The infra-red light source (108) according to one of the five preceding claims, **characterized by**
- at least one preferably coil-shaped electrical heater wire (110) and
- a carrier body (112) comprising at least one carrier material, a first portion of the carrier body (112) being coated by at least one layer (114) comprising the ceramic composition as claimed in one of the preceding claims referring to a ceramic composition, a second portion of the carrier body (112) being coated by at least one reflector layer (116) reflecting infra-red light (120) emitted by the at least one layer (114) comprising the ceramic composition.

15. The infra-red light source (108) according to the preceding claim, the electrical heater wire (110) being in heat-transfer contact with the carrier body (112).

16. The infra-red light source (108) according to one of the preceding claims referring to an infra-red light source (108), the infra-red light source (108) essentially having the shape of a rod or a tube or a plate.

17. The infra-red light source (108) according to one of the preceding claims referring to an infra-red light source (108), **characterized by** a maximum in emissivity at a wave-length of 1.0 to 40 micrometers, preferably 10 to 20 micrometers, and most preferably of 2 to 4 micrometers.

18. A setup for processing a plastic material and/or an object (122; 510; 610; 710, 712; 810) comprising at least one plastic material, the setup comprising an object (122; 510; 610; 710, 712; 810) to be processed and the infra-red light source (108) according to one of the preceding claims referring to an infra-red light source (108), the infra-red light source (108) at least partially surrounding the object (122; 510; 610; 710, 712; 810) and/or at least partially filling at least one cavity within the object (122; 510; 610; 710, 712; 810).
